Europäisches Patentamt

European Patent Office

Office européen des brevets

(11) Numéro de publication : **0 448 468 A1**

# (12) DEMANDE DE BREVET EUROPEEN

(21) Numéro de dépôt : **91400754.7**

(51) Int. Cl.⁵ : **H04N 7/00**

(22) Date de dépôt : **20.03.91**

(30) Priorité : 20.03.90 FR 9003548

(43) Date de publication de la demande :
25.09.91 Bulletin 91/39

(84) Etats contractants désignés :
DE GB

(71) Demandeur : **FRANCE TELECOM**
**6 place d'Alleray**
**F-75015 Paris (FR)**
Demandeur : **TELEDIFFUSION DE FRANCE**
**10, rue d'Oradour sur Glane**
**F-75015 Paris (FR)**

(72) Inventeur : **Blaize, Christian**
**3, Passage René Leherpeux**
**F-35000 Rennes (FR)**

(74) Mandataire : **Fort, Jacques**
**CABINET PLASSERAUD 84, rue d'Amsterdam**
**F-75009 Paris (FR)**

(54) **Procédé et installation de diffusion de programmes de télévision haute définition sur canal à bande étroite.**

(57)    L'installation de diffusion de TV HD suivant la norme HD-MAC comprend un émetteur alimentant un canal à bande étroite, ayant un échantillonneur (14), un codeur (18) de réduction de bande passante par un facteur quatre par sous-échantillonnage spatio-temporel sélectionné parmi au moins deux modes, en fonction de l'activité des zones de l'image, l'un au moins des modes mettant en oeuvre un brassage vertical intra-trame provoquant l'apparition de structures à des fréquences proches d'une fréquence déterminée, suivi d'un codeur MAC (20). Un module numérique d'atténuation (30) suit le codeur (18) et précède le codeur MAC (20), effectuant un filtrage spatial intra-ligne dans la trame d'atténuation des hautes fréquences des structures créées par le brassage vertical intra-trame.

EP 0 448 468 A1

FIG.1.

## PROCEDE ET INSTALLATION DE DIFFUSION DE PROGRAMMES DE TELEVISION HAUTE DEFINITION SUR CANAL A BANDE ETROITE

L'invention concerne la diffusion de programmes de télévision fournissant une image à haute définition sous forme d'un multiplex de signaux numériques de son et de données et de signaux analogiques constitués par un multiplex des composantes vidéo (luminance et chrominance).

Parmi les problèmes que pose l'adoption de la télévision à haute définition, deux sont liés à l'hétérogénéité des canaux de transmission et à l'hétérogénéité du parc de récepteurs.

Dans le cas notamment de la télévision à haute définition du type dit HD-MAC, dont on pourra trouver une description dans "L'Onde Electrique", juillet-août 1989, Vol. 69, No. 4, pp. 3-42, les canaux de transmission prévus sont, d'une part, les canaux de diffusion par satellite à "large bande", de 10,125 MHz, d'autre part, les canaux de réseaux terrestres, hertziens ou câblés, ayant une "bande étroite" de 6,75 MHz environ. Les programmes doivent, au moins pendant une période transitoire, être visualisables non seulement sur les récepteurs congrus pour recevoir les émissions à haute définition, mais aussi, avec une dégradation acceptable, par des récepteurs de première génération prévus pour recevoir les programmes émis suivant une des normes X-MAC (essentiellement D2-MAC et D-MAC).

La transmission intégrale à 50 Hz d'une image haute définition au format 16/9, de 1250 lignes de 1440 points, ce qui implique un échantillonnage de l'image source à 54 MHz, exigerait une largeur de bande très supérieure à celle des canaux prévus. L'adaptation aux canaux "large bande" implique une division par 4 de la bande spectrale de transmission. Elle est obtenue par échantillonnage sub-Nyquist de l'image, adaptatif à l'activité temporelle des différentes zones de l'image à transmettre. L'image est découpée en blocs, par exemple de 16 lignes de 16 points (c'est-à-dire de 8 lignes de 16 points par trame) et chaque bloc est codé, avant émission, suivant un mode qui dépend de son activité temporelle. Ce sous-échantillonnage adaptatif est réalisé par un codeur de réduction de largeur de bande, souvent désigné par l'abréviation BRE ; trois voies sont à l'heure actuelle prévues :

— une première voie, dite en mode 80 ms, met en oeuvre des opérations de préfiltrage réparties, entre quatre trames successives de transmission, les échantillons retenus dans une image, à un instant donné, étant disposés en quinconce dans l'image ; ce mode est utilisé pour les zones fixes ou à très faible activité temporelle de l'image ;

— une seconde voie, dite en mode 40 ms ou "à saut de trame", écarte une trame sur deux. Elle met en oeuvre des opérations de préfiltrage et des opérations de post-traitement, notamment la détermination d'un vecteur indiquant la direction et l'amplitude du mouvement. Cette voie est utilisée pour les blocs de l'image ayant une activité temporelle compensable en utilisant le vecteur mouvement transmis en même temps que le signal vidéo dans des données d'assistance ;

— la troisième voie, dite mode 20 ms, retient un point sur deux de la structure en mode 80 ms et met en oeuvre uniquement des opérations de pré-filtrage.

Le BRE comprime ainsi la bande passante dans un rapport 4 et ramène la fréquence d'échantillonnage à 13,5 MHz.

Les modes 20 et 80 ms mettent en oeuvre un brassage vertical intra-trame, dit "shuffling", destiné notamment à permettre aux récepteurs de première génération de recevoir une image compatible acceptable. Divers modes de brassage sont possibles. On en trouvera des exemples dans la demande de brevet FR n° 89 12410 dont les titulaires sont les mêmes que ceux de la présente demande.

Ce brassage vertical intra-trame génère des structures parasites, à des fréquences réparties autour d'une fréquence déterminée de porteuse. La perturbation qu'elles apportent est d'autant plus élevée que leur fréquence est proche de celle de la porteuse.

Dans le cas particulier, évoqué plus haut, d'un signal HD-MAC normalisé, la fréquence de la porteuse due au brassage vertical intra-trame est de 6,75 MHz. La fréquence de cette porteuse, présente à la sortie du BRE, est décalée par la dilatation du spectre fréquentiel provoquée par le codeur MAC qui suit le BRE et comprime temporellement le signal de luminance dans un rapport 3/2. La porteuse est donc, lors de la transmission, transposée à 10,125 MHz et elle est alors filtrée lors des conversions numérique-analogique à l'émission, puis analogique-numérique à la réception.

Cette élimination, ou du moins cette forte atténuation, de la porteuse due au brassage vertical, n'intervient pas dans d'autres cas.

C'est en particulier le cas lors de la mise en oeuvre d'un procédé permettant de diffuser des programmes de télévision haute définition sur des canaux à bande étroite et d'écarter les défauts que provoquerait la réduction brutale de l'encombrement spectral du signal par filtrage. Par exemple, dans le cas évoqué plus haut de la diffusion d'un signal HD-MAC, où la réduction d'encombrement spectral due au BRE n'est pas suffisante pour la transmission sur des réseaux terrestres, la coupure à 6,75 MHz d'un signal HD-MAC (dont la largeur de bande est d'environ 10,125 MHz) dégrade très considérablement l'image restituée, aussi bien par des récepteurs HD-MAC que par des récepteurs de première génération.

Le problème est écarté en mettant en oeuvre un procédé dont on trouvera une description dans la demande de brevet déposée le même jour que la présente demande et au nom des mêmes titulaires, pour "Procédé et dispositif de codage-décodage d'un signal numérique de télévision haute définition en bande étroite", résumée ci-après. Suivant ce procédé, on échantillonne le signal vidéo analogique à une fréquence qui n'est que x% de la fréquence adoptée dans le cas d'un signal vidéo transmis sur un canal large bande (x étant le rapport entre les bandes passantes du canal à bande étroite et du canal à bande large). A la réception, une opération duale est effectuée.

Ce procédé permet de diffuser, de transmettre ou de distribuer un signal HD-MAC, sur un canal à bande étroite, soit directement à partir d'une prise de vue, soit à partir de la tête d'un réseau de distribution à bande étroite alimenté par un canal à large bande, par un simple transcodage, en autorisant ainsi la réception par des récepteurs HD-MAC et MAC avec simplement des moyens supplémentaires simples et une dégradation réduite.

Dans le cas particulier d'un canal de réseau terrestre ayant une largeur de bande de 6,75 MHz, on alimentera le BRE par des signaux de luminance échantillonnés à 9 MHz au lieu de 13,5 MHz (c'est-à-dire avec une réduction de 1/3 du taux d'échantillonnage). Ainsi, le codeur MAC, qui normalement effectue une compression temporelle donnant aux échantillons de luminance une fréquence de 20,25 MHz, ne leur donnera plus qu'une fréquence de 13,5 MHz.

Une opération similaire sera effectuée pour les signaux de chrominance.

Mais, du fait qu'on ramène ainsi la fréquence d'échantillonnage des signaux de luminance de 54 à 36 MHz avant passage dans le BRE, la porteuse générée par le brassage vertical a, à la sortie du BRE, une fréquence de 4,5 MHz qui est portée à 6,75 MHz à la sortie du codeur MAC. Cette porteuse n'est alors plus filtrée par les conversions analogique-numérique à l'émission et numérique-analogique à la réception et l'image compatible est dégradée. Si un filtre de Nyquist est prévu à l'émission, il atténue cette porteuse, mais de façon insuffisante pour éviter la dégradation de l'image compatible restituée par un récepteur de première génération.

Il n'est pas possible, pour atténuer la porteuse due au brassage intra-trame, d'utiliser un filtrage temporel. Il dégraderait le rendu du mouvement en mode 20 ms.

L'invention vise à fournir un procédé de diffusion mettant en oeuvre un codage de réduction de bande passante qui, dans certains modes au moins, génère des structure parasites autour d'une fréquence déterminée non écartées par le codage N/A ou A/N, et cela en ne mettant en oeuvre que des moyens simples et sans dégrader le rendu des mouvements.

Dans ce but, l'invention propose notamment un procédé de diffusion de programmes de télévision de type HD-MAC sur un canal de transmission, suivant lequel on soumet le signal vidéo à un codage de réduction de bande passante dans un rapport déterminé par sous-échantillonage spatio-temporel sélectionné parmi au moins deux modes, en fonction de l'activité des zones de l'image, l'un au moins des modes mettant en oeuvre un brassage vertical intra-trame provoquant l'apparition de structures à des fréquences proches d'une fréquence déterminée, caractérisé en ce qu'on soumet le signal vidéo à un filtrage passe-bas spatial intra-ligne d'atténuation de ladite fréquence déterminée.

Dans le cas d'un BRE qui met en oeuvre les modes 20, 40 et 80 ms mentionnés plus haut, l'action du filtrage spatial passe-haut qui vient d'être défini peut être complétée, pour le mode 80 ms, par un filtrage temporel destiné à diminuer les effets du sous-échantillonnage sub-Nyquist et les défilements sur les contours. Dans le cas d'un BRE ne mettant en oeuvre que les voies 20 et 40 ms, seul le filtrage spatial intervient pour atténuer les structures parasites, qui n'apparaît alors qu'en mode 20 ms.

Le filtrage spatial mentionné ci-dessus n'est pas nécessaire pour la voie 40 ms. Cependant, pour des raisons de simplicité, il est en général avantageux de traiter la totalité de l'image de la même façon. Cela permet en particulier de s'affranchir de problèmes de filtrage en bord des blocs fractionnant l'image et pouvant être codés de façon différente les uns des autres par le BRE. La dégradation apportée par le filtrage spatial sur la voie 40 ms reste toujours très faible.

L'invention trouve une application particulièrement importante dans le cas de la diffusion de programmes HD-MAC sur bande étroite car, comme on l'a vu plus haut, les structures parasites ne sont pas éliminées par le codage numérique-analogique ou analogique-numérique et l'effet du filtrage de Nyquist à l'émission, s'il est prévu, est insuffisant. Dans ce cas particulier, une atténuation des hautes fréquences comprises entre 8 et 11 dB sera généralement adoptée. L'atténuation fournie par un filtre de Nyquist éventuel doit être prise en considération pour déterminer l'atténuation propre à donner au filtre spatial intra-ligne supplémentaire. En général, une atténuation totale de 10 dB sera proche de l'optimum. En effet, une valeur supérieure tend à dégrader le rapport signal à bruit.

Le filtrage pourra être effectué par une opération de séparation des basses fréquences spatiales et des hautes fréquences spatiales, une atténuation des hautes fréquences dans un rapport déterminé, puis une sommation des hautes fréquences atténuées et des basses fréquences. Le filtre de séparation pourra avoir une bande de transition d'environ 0,675 MHz, soit environ 1/10ème de la fréquence d'échantillonnage. Il sera en général souhaitable de prévoir le nombre de coefficients de façon que le taux d'ondulation au-dessus et au-dessous de la bande de transition soit inférieur à 0,25 dB.

On adoptera en général un filtre séparateur symétrique, ayant de 5 à 15 coefficients, le coefficient médian (affecté au point courant) étant au moins moitié du total des coefficients.

L'invention propose également un dispositif de diffusion mettant en oeuvre le procédé ci-dessus et un récepteur haute définition comprenant un module d'accentuation effectuant l'opération duale d'un module d'atténuation des hautes fréquences contenu dans l'émetteur et éliminant les structures parasites. Un récepteur de première génération, étant démuni de décodeur de réduction de bande passante effectuant l'opération duale de celle du codeur BRE, ne comporte pas un tel module d'accentuation. La reproduction de l'image ne sera cependant pas gênée par la présence des structures parasites, du fait de leur atténuation à l'émission.

L'invention sera mieux comprise à la lecture de la description qui suit de modes particuliers de réalisation, donnés à titre d'exemples non limitatifs. La description se réfère aux dessins qui l'accompagnent, dans lesquels :

– la Figure 1 est un synoptique de principe montrant les étapes intervenant dans le traitement du signal vidéo dans une installation de diffusion depuis la source jusqu'à la restitution, dans le cas de transmission sur canal à bande étroite ;

– les Figures 2A et 2B sont des courbes représentatives montrant l'effet du brassage intratrame en cas de diffusion en bande large et de diffusion en bande étroite ;

– la Figure 3 montre une constitution possible de module d'atténuation utilisable dans un émetteur suivant le schéma de principe de la Figure 1.

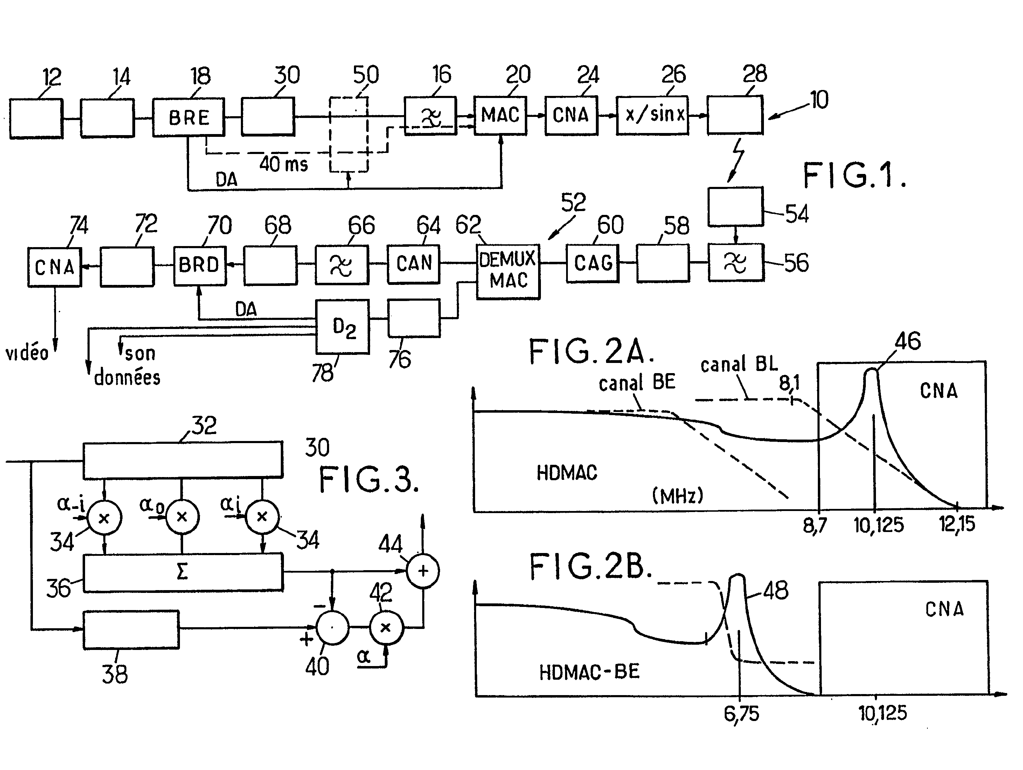

On décrira tout d'abord, en faisant référence à la Figure 1, la constitution de principe d'un dispositif de télévision à haute définition de la famille HD-MAC permettant la diffusion sur canal étroit. Sur la Figure 1, seuls les éléments nécessaires à l'explication de l'invention ont été représentés.

L'émetteur 10 est destiné à transmettre, sur un canal à bande étroite, un programme audio-visuel, à partir d'images fournies par une source 12 telle qu'une caméra, et d'une source sonore.

Il peut être utile de rappeler tout d'abord les composants communs avec ceux d'un émetteur HD-MAC en bande large. L'échantillonneur 14 fournit des échantillons numériques à une fréquence de 54 MHz pour la diffusion en bande large, ou HD MAC-BL. Les échantillons de luminance à une fréquence de 54 MHz et de chrominance à une fréquence de 27 MHz sont appliqués au codeur de réduction de largeur de bande ou BRE 18, qui réduit la fréquence d'échantillonnage, à 13,5 MHz pour la luminance. Un circuit 16 réalise une pré-accentuation destinée à réduire le bruit et un filtrage de Nyquist. Souvent, on aura intérêt à répartir le filtrage de Nyquist entre l'émission et la réception : le circuit 16 constituera alors un demi-Nyquist. Le codeur MAC 20 multiplexe les signaux vidéo provenant du BRE 18 et les signaux de son et de données codés en duobinaire par le codeur 22. En général, les données d'assistance DA à insérer dans le multiplex sont adressées au codeur MAC non pas en duobinaire à une cadence de 10,125 Mbits par seconde, mais à une cadence double, de 20,25 Mbits par seconde. Pour simplifier, il ne sera question dans ce qui suit que du signal vidéo et du signal duobinaire de son et de données.

Le multiplex comportant les signaux de luminance et de chrominance à 20,25 MHz, respectivement comprimés dans les rapports 2/3 et 1/3, est appliqué à un convertisseur numérique-analogique en 24, soumis à un filtrage en x/sin x en 26, et enfin appliqué à un modulateur de fréquence 28 avant émission sur le canal de transmission.

Dans le cas d'une émission sur canal en bande étroite (HD MAC-BE), la fréquence d'échantillonnage par l'échantillonneur 14 est réduite à 36 MHz. En conséquence, les échantillons représentatifs de la luminance en sortie du BRE 18 n'ont plus qu'une fréquence de 9 MHz et la bande passante requise du canal de transmission est réduite de 10,125 à 6,75 MHz.

Suivant l'invention, le signal vidéo fourni par le BRE 18 est soumis à un filtrage spatial dans un filtre 30, de caractéristiques telles qu'il atténue les structures parasites dues au brassage vertical intra-trame. Les courbes 46 et 48, respectivement sur les Figures 2A et 2B, montrent la concentration d'énergie due aux structures parasites introduites par le brassage, respectivement dans le cas du codage HD MAC-BL et du codage HD MAC-BE. Les fréquences de porteuse, dans le sens des lignes, sont respectivement de 10,125 et de 6,75 MHz. Dans le premier cas, le convertisseur numérique-analogique réduit l'énergie au-delà de 8,7 MHz environ et en conséquence atténue de façon suffisante l'énergie des structures parasites. Il n'en est pas de même dans le cas du codage HD-MAC-BE en vue de la diffusion sur canal à bande étroite.

Le filtre 30 a alors avantageusement une réponse du genre indiqué en tirets sur la Figure 2B, provoquant une forte atténuation au-delà de 6 MHz environ.

Le filtre peut avoir la constitution de principe montrée en Figure 3. Il comprend alors un étage séparateur et un étage atténuateur. L'étage séparateur représenté est constitué par un filtre d'extraction des basses fréquences à $2i+1$ coefficient $\alpha_{-i},...,\alpha_0, ... \alpha_i$

utilisant une mémoire de points 32, des multiplieurs 34 et un sommateur 36. Le nombre de coefficients 2i+1 est choisi en fonction de la raideur souhaitée pour le filtre et du taux d'ondulation admissible au-dessus et au-dessous de la bande de transition. Les hautes fréquences sont obtenues en appliquant, à un soustracteur 40, d'une part, le signal retardé en 38 du temps de transit dans le filtre 32 et, d'autre part, la sortie du sommateur. Un multiplieur 42 atténue les hautes fréquences dans un rapport $\alpha$. La somme des hautes fréquences atténuées et des basses fréquences est obtenue à la sortie d'un additionneur 44.

Comme on l'a indiqué plus haut, une atténuation des hautes fréquences de 10 dB donne en général des résultats satisfaisants. Si un filtre demi-Nyquist, donnant une atténuation d'environ 3 dB, est prévu dans l'émetteur en amont du BRE, une atténuation de 7 dB sera suffisante. Si le filtre 16 est un filtre de Nyquist donnant une atténuation de 6 dB pour les hautes fréquences, une atténuation supplémentaire de 4 dB sera suffisante.

Le filtre de séparation peut notamment avoir les constitutions suivantes :

– filtre à cinq coefficients, utilisable notamment dans le cas où les hautes fréquences ne sont atténuées que sur les blocs codés en mode 20 ms ou 80 ms :

$\alpha_0 : 6/8$

$\alpha_1 = \alpha_{-1} = 2/8$

$\alpha_2 = \alpha_{-2} = -1/8$

– filtre à quinze coefficients :

$\alpha_0 : 1444/2048$

$\alpha_1 = \alpha_{-1} = 509/2048$

$\alpha_2 = \alpha_{-2} = -298/2048$

$\alpha_3 = \alpha_{-3} = 66/2048$

$\alpha_4 = \alpha_{-4} = 62/2048$

$\alpha_5 = \alpha_{-5} = -97/2048$

$\alpha_6 = \alpha_{-6} = 53/2048$

$\alpha_7 = \alpha_{6à} = 7/2048$.

Les effets de bord d'image sont très réduits, même dans le cas d'un filtre de séparation de grande longueur, du fait que l'image visible comporte un nombre de points par ligne (697 par exemple) nettement inférieur au nombre de points transmis (720 par exemple).

Souvent, la solution la plus avantageuse consiste à soumettre la totalité de l'image à l'atténuation des hautes fréquences dans le module d'atténuation 30. Il est toutefois possible de rendre l'atténuation adaptative au mode de codage de réduction de bande. Comme indiqué en tirets sur la Figure 1, un commutateur 50 peut être prévu pour que les blocs codés en mode 40 ms contournent le module d'atténuation. Il doit également gérer les effets de bord.

Pour qu'un récepteur HD-MAC 52 puisse également recevoir un signal HD-MAC en bande étroite, il suffit de lui ajouter quelques éléments et un syntoniseur commutable. Les étages d'entrée 54 fournissent encore un signal à fréquence intermédiaire qui est soumis à filtrage en 56, puis passe dans un démodulateur 58 et un circuit 60 de commande automatique de gain et de clampage. Un décodeur-démultiplexeur 62 accomplit la fonction inverse du codeur MAC 20. La voie vidéo comprend ensuite un convertisseur analogique-numérique 64 à 27 MHz qui peut être suivi d'un filtre Nyquist ou semi-Nyquist 66. Un décodeur en bande étroite ou BRD 70 remplit la fonction duale de celle du BRE 18. Le filtre de Nyquist 66 peut être associé à un égaliseur, utilisant par exemple une séquence pseudo-aléatoire de référence (EP-A-0 328 461). Pour la réception d'un signal HD MAC-BE, le BRD 70 est suivi d'un circuit d'extension 72 permettant de reconstituer les signaux nécessaires à une image large et de les fournir à un convertisseur numérique-analogique 74. Si le signal émis a été soumis à une atténuation des hautes fréquences en ligne, un module accentuateur 68 effectuant l'opération duale de celle du module 30 est placé en amont du BRD 70. Le facteur a est alors remplacé par $1/\alpha$. La voie "son et données" a une constitution classique, du moins lorsque les données d'assistances sont toutes codées en duobinaire à la même cadence de bits que le son. Elle comprend un égaliseur 76 et un décodeur D2 78.

## Revendications

1.  Procédé de diffusion de programmes de télévision du type HD-MAC sur un canal de transmission, suivant lequel on soumet le signal vidéo à un codage de réduction de bande passante dans un rapport déterminé par sous-échantillonnage spatio-temporel sélectionné parmi au moins deux modes, en fonction de l'activité des zones de l'image, l'un au moins des modes mettant en oeuvre un brassage vertical intra-trame provoquant l'apparition de structures à des fréquences proches d'une fréquence déterminée, caractérisé en ce qu'on soumet le signal vidéo à un filtrage passe-bas spatial intra-ligne d'atténuation de ladite fréquence déterminée.

2.  Procédé selon la revendication 1, caractérisé en ce que, ledit codage de réduction de bande passante étant précédé d'une réduction supplémentaire de la fréquence d'échantillonnage du signal de luminance de 30% ramenant la fréquence des échantillons de luminance à la sortie d'un codeur MAC de 20,25 MHz à 13,5 MHz, le filtrage est effectué pour atténuer les fréquences à partir de 6 MHz environ.

3.  Procédé selon la revendication 1 ou 2, caractérisé en ce que la totalité de l'image, quel que soit le mode de codage, est soumise audit filtrage spatial intra-ligne d'atténuation des fréquences hautes.

4. Procédé selon la revendication 3, caractérisé en ce que l'atténuation des fréquences hautes provoquées par ledit filtrage et un filtrage éventuel de Nyquist à l'émission soit compris entre 8 et 11 dB, avantageusement de 10 dB environ.

5. Procédé selon la revendication 4, caractérisé en ce que, à la réception par un récepteur HD-MAC, on soumet le signal à une opération de filtrage duale de l'opération de filtrage à l'émission, avant décodage.

6. Installation de diffusion de programmes de télévision haute définition comprenant un émetteur alimentant un canal à bande étroite, ayant un échantillonneur (14), un codeur (18) de réduction de bande passante par un facteur quatre par sous-échantillonnage spatio-temporel sélectionné parmi au moins deux modes, en fonction de l'activité des zones de l'image, l'un au moins des modes mettant en oeuvre un brassage vertical intra-trame provoquant l'apparition de structures à des fréquences proches d'une fréquence déterminée, suivi d'un codeur MAC (20), caractérisée par un module numérique d'atténuation (30) qui suit le codeur (18) et précède le codeur MAC (20), effectuant un filtrage spatial intra-ligne dans la trame d'atténuation des hautes fréquences des structures créées par le brassage vertical intra-trame.

7. Installation selon la revendication 6, caractérisée en ce que le module d'atténuation (30) comprend :
   – un étage séparateur de hautes fréquences ayant un filtre (32, 34, 36) d'extraction des basses fréquences et un soustracteur (40),
   – un étage atténuateur relié à la sortie du soustracteur et attaquant un sommateur (44) dont la seconde entrée reçoit la sortie du filtre d'extraction.

8. Installation selon la revendication 7, caractérisée en ce que le filtre d'extraction est un filtre symétrique ayant 5 à 11 coefficients fixes.

9. Installation selon la revendication 6, 7 ou 8, caractérisée en ce qu'elle comprend un récepteur HD-MAC en bande étroite, ayant un module accentuateur (68) effectuant l'opération duale de celle du module atténuateur.

FIG.1.

FIG.2A.

FIG.2B.

FIG.3.

Office européen
des brevets

**RAPPORT DE RECHERCHE EUROPEENNE**

Numero de la demande

EP 91 40 0754

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PROCEEDINGS OF THE SECOND INTERNATIONAL WORKSHOP ON SIGNAL PROCESSING OF HDTV, L'Aquila, 29 février - 2 mars 1988, pages 119-128; B. WENDLANG et al.: "HD-MAC: A concept for narrowbannd compatible HQTV-transmisson" * Page 121, lignes 3-17; page 124, ligne 30 - page 125, ligne 21 * --- | 1,6 | H 04 N 7/00 |
| A | SYMPOSIUM RECORD, BROADCAST SESSIONS, 16TH INTERNATIONAL TV SYMPOSIIUM, Montreux, 17 - 22 juin 1989, pages 37-52; Ir. F.W.P. VREEWIJK et al.: "HDMAC coding for compatible broadcasting of high definition television signals" * Page 40, paragraphe 3.1; page 41, paragraphe 3.3; page 45, paragraphe 6 * --- | 1,6 | |
| A | PHILLIPS TECHNICAL REVIEW, vol. 43, no. 8, août 1987, page 197-212; M.J.J.C. ANNEGARN et al.: "HD-MAC: a step forward in the evolution of television technology" * Page 202, colonne de gauche, ligne 30 - page 203, colonne de droite, ligne 12 * --- | 1,6 | **DOMAINES TECHNIQUES RECHERCHES (Int. Cl.5)** <br><br> H 04 N |
| A | CONTRIBUTION TO THE CLUB DE RENNES YOUNG RESEARCHERS' SEMINAR, M.I.T., Cambridge, Mass., 9 - 13 octobre 1988, pages 1-20; F.W.P. VREESWIJK: "HD-MAC coding for broadcasting of high definition television signals" * Page 10, paragraphe 6; figures 20a,20b * --- -/- | 1,5,6,9 | |

Le présent rapport a été établi pour toutes les revendications

| Lieu de la recherche | Date d'achèvement de la recherche | Examinateur |
|---|---|---|
| LA HAYE | 03-06-1991 | BOSCH F.M.D. |

Office européen
des brevets

**RAPPORT DE RECHERCHE EUROPEENNE**

Numero de la demande

EP 91 40 0754

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 902 204 (SCIENTIFIC ATLANTA) <br> * Résumé * <br> --- | 1 | |
| A | EP-A-0 163 512 (RCA CORP.) <br> * Page 3, ligne 9 - page 4, ligne 30 * <br> --- | 1,5,6,9 | |
| A | EP-A-0 316 232 (CNET) <br> * Document en enntier * <br> ----- | 1,5,6,9 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 03-06-1991 | BOSCH F.M.D. |

EPO FORM 1503 03.82 (P0402)